(19) Europäisches Patentamt
European Patent Office
Office européen des brevets

(11) **EP 4 679 340 A1**

(12) **EUROPÄISCHE PATENTANMELDUNG**

(43) Veröffentlichungstag:
**14.01.2026 Patentblatt 2026/03**

(21) Anmeldenummer: **24188029.3**

(22) Anmeldetag: **11.07.2024**

(51) Internationale Patentklassifikation (IPC):
**G06Q 10/04** (2023.01)   **G06Q 50/06** (2024.01)

(52) Gemeinsame Patentklassifikation (CPC):
**G06Q 10/04; G06Q 50/06;** F24S 2201/00;
G06N 20/00

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder: **Die Erfindernennung liegt noch nicht
vor**

(74) Vertreter: **Siemens Patent Attorneys
Postfach 22 16 34
80506 München (DE)**

(54) **COMPUTERIMPLEMENTIERTES VERFAHREN UND ANORDNUNG ZUR OPTIMIERUNG EINER ENERGIEVERSORGUNG MINDESTENS EINES GEBÄUDES**

(57)     Die vorliegende Erfindung betrifft ein computer-implementiertes Verfahren zur Optimierung einer Energieversorgung mindestens eines Gebäudes mittels einer Datenverarbeitungseinrichtung, bei dem
mittels einer ersten Schnittstelle ein Kundendatensatz aus einem Kundendatenspeicher empfangen wird, und mittels mindestens einer zweiten Schnittstelle Gebäudedatensätze empfangen werden, und anhand des Kundendatensatzes und der Gebäudedatensätze eine Co-Simulation, die technische und wirtschaftliche Parameter der Energieversorgung des Gebäudes berücksichtigt,
durchgeführt wird,
dadurch gekennzeichnet, dass
mittels der Datenverarbeitungseinrichtung anhand des Kundendatensatzes die Gebäudedatensätze ermittelt werden, indem automatisiert eine Internetrecherche mit einem Scraping-Werkzeug und ein Zugriff auf Datenbanken mit öffentlich zugänglichen Informationen ausgeführt werden.

Ferner betrifft die Erfindung eine entsprechende Anordnung und ein entsprechendes Computerprogramm.

FIG 2

EP 4 679 340 A1

# EP 4 679 340 A1

**Beschreibung**

Die Erfindung betrifft ein Computerimplementiertes Verfahren zur Optimierung einer Energieversorgung mindestens eines Gebäudes gemäß dem Oberbegriff des Anspruchs 1 sowie eine Anordnung zur Optimierung einer Energieversorgung mindestens eines Gebäudes gemäß dem Oberbegriff des Anspruchs 14 sowie ein Computerprogramm nach Anspruch 17.

Aus den Druckschriften EP 4345676 A1 sowie EP 4345675 A1 ist es bekannt, eine technisch-ökonomische Co-Simulation von Energieversorgungssystemen für Gebäude oder Anlagen vorzusehen. Die Co-Simulation betrachtet neben den technischen Anforderungen an eine zu bereitstellende Leistung in kWh und entsprechender Lastprofile auch Aspekte der Energieeinsparung und Kosteneinsparung durch die Installation von z.B. Photovoltaikanlagen. Ferner werden wirtschaftliche Aspekte wie Stromtarife, Strafkosten für das Überschreiten von Peak-Leistungen und Nachrüstungs- sowie Wartungskosten entsprechender Systeme berücksichtigt. Es gibt unterschiedliche bekannte Softwarelösungen, die sich mit dem Problem der techno-ökonomischen Optimierung befassen, z. B. das System Advisor Model von NREL (https://sam.nrel.gov/), die Energy Toolbase (https://www.energytoolbase.com) und das Siemens-Tool PSS-DE. Diese Tools benötigen manuelle Eingaben für das Sammeln von Daten und die Durchführung von Berechnungen.

Ein Gebäude kann beispielsweise an ein Stromnetz angeschlossen sein und lediglich elektrische Energie von einem Energienetzbetreiber erhalten. Es können aber auch bereits eigene Energieerzeuger installiert sein. Beispielhafte Komponenten sind Generatoren, Gasturbinen, Batterien, Photovoltaik-Stromquellen usw. Zu den beispielhaften Bauteilen gehören auch Lasten, z.B. elektrische Lasten, thermische Lasten oder Wasserstofflasten.

Die Leistung eines solchen Energieversorgungssystems eines Gebäudes und/oder seiner Komponenten sollte über seine Lebensdauer von z. B. 20 Jahren simuliert werden.

Basierend auf einer solchen Simulation kann eine Verbesserung im Hinblick auf die Energiekosten und/oder Umweltaspekte der Energieerzeugung und des Verbrauchs, z.B. durch Einsparung von CO2, ermittelt werden. Die Energieversorgung des Gebäudes kann optimiert und die Auslegung verbessert werden. Es können insbesondere Erzeuger wie PV-Anlagen und zusätzlich batterieelektrische Energiespeicher vorgeschlagen werden.

Bisherige Ansätze für solche technisch-ökonomischen Co-Simulationen können jeweils nur ein einzelnes Gebäude oder einen Gebäude- bzw. Anlagenkomplex an einem einzigen Ort optimieren. Es gibt jedoch Kunden, die beispielsweise dutzende oder sogar hunderte gleichartig gestalteter Ladengeschäfte oder Warenlager betreiben, die an entsprechend unterschiedlichen Orten gebaut wurden. Es kann sich z.B. um eine Kette von Baumärkten handeln, die alle über einen sehr ähnlichen Grundriss und einen vergleichbar großen Parkplatz verfügen und auch über eine ähnliche Ausstattung mit Heizungen, Belüftung und Klimaanlagen verfügen. Es wäre mit bisherigen Ansätzen viel zu aufwendig und teuer, die für eine Optimierung jedes Standorts erforderlichen Daten manuell zu sammeln und einzugeben.

An die Erfindung stellt sich daher die Aufgabe, ein vergleichsweise einfaches und automatisiertes Verfahren zur Optimierung von Gebäuden anzugeben.

Die Erfindung löst diese Aufgabe durch ein Verfahren gemäß Anspruch 1.

Die Erfindung befasst sich mit Energiesparmaßnahmen für energieverbrauchende und/oder produzierende Einrichtungen, z. B. Gebäude, Industrie- oder Gewerbestandorte oder Microgrids. Das Problem, das es löst, ist die techno-ökonomische Berechnung und die Steuerung solcher Maßnahmen. Die techno-ökonomische Berechnung bestimmt Upgrades, z.B. Austausch und Verbesserung von Komponenten für Heizung und Kühlung, Gebäudeleittechnik, eigene Erzeugung (z.B. Photovoltaik-Erzeugung) und Energiespeicher wie Batteriespeicher und Wärme-/Kältespeicher. Die Berechnung umfasst wirtschaftliche Aspekte wie Energiepreise, Betriebs- und Kapitalkosten, Steuern und Anreize. Die Berechnung umfasst die Parametrierung und das Regelungsschema für diese Komponenten. Im Betrieb werden die Parameter und die Regelungsschemata in der Vor-Ort-Steuerung implementiert und eingesetzt.

Ein wesentliches Merkmal der Erfindung ist die automatisierte Integration mehrerer Eingaben aus externen Quellen über APIs in die techno-ökonomische Berechnung.

Eine Optimierung einer Energieversorgung mindestens eines Gebäudes ist im Sinne der Erfindung ein Verfahren, bei dem als Input Informationen über das Gebäude und dessen Energieverbrauch sowie wirtschaftliche Aspekte berücksichtigt werden. Als Ergebnis wird eine Nachrüstung mit energieeffizienteren Komponenten empfohlen und/oder eine verbesserte Steuerung des Energieverbrauchs des Gebäudes zur Verfügung gestellt.

Eine Datenverarbeitungseinrichtung kann wie eine Kontrolleinrichtung beispielsweise einen Computer mit Datenspeicher und Datenprozessor aufweisen. Es können Eingabeschnittstellen und Ausgabeschnittstellen sowie Anzeigegeräte vorgesehen werden. Es kann beispielsweise ein Server mit Festplatten und Prozessoren zum Einsatz kommen. Es kann sich auch um Softwarekomponenten eines Cloudsystems handeln, das das Gebäude per Datenkommunikation über das Internet ansteuert. Ferner kann es sich auch um eine hybride Architektur handeln, bei der manche Funktionen lokal im Gebäudecontroller und andere Funktionen zentral in der Cloud ausgeführt werden.

Eine dem Gebäude zugeordnete Kontrolleinrichtung der Energieversorgung ist z.B. ein Computer des Kunden, dem das Gebäude gehört.

Die erste und die zweite Schnittstelle sind beispielsweise in Hardware und/oder Software ausgebildet, um eine Datenkommunikation in einem oder mehreren Datenformaten zu ermöglichen.

Ein Kundendatensatz weist z.B. eine Ansammlung von Informationen über das Gebäude auf. Er ist z.B. in einem Kundendatenspeicher (eines Kunden) gespeichert und kann an die Datenverarbeitungseinrichtung übermittelt werden. Die Gebäudedatensätze können von einer Vielzahl unterschiedlicher externer Datenbanken, die z.B. von externen Dienstleistern betrieben werden, abgerufen werden. Beispielsweise können Satellitenbilder oder auch Wetterinformationen abgerufen werden.

Eine Co-Simulation, die technische und wirtschaftliche Parameter der Energieversorgung des Gebäudes berücksichtigt,
ist im Sinne der Erfindung ein computergestütztes Optimierungsverfahren, bei dem in einem Arbeitsschritt sowohl eine Optimierung von technischen Aspekten (z.B. ob und welche PV-Anlagen nachgerüstet werden sollten) als auch von wirtschaftlichen Aspekten (Kosten der Nachrüstung, Kosteneinsparungen beim Einkauf elektrischer Energie) stattfindet. Damit unterscheidet sich dieser Ansatz von anderen Simulationen, bei denen entweder zuerst die technischen Aspekte und danach die wirtschaftlichen Aspekte simuliert werden - oder umgekehrt.

Ein Energieeinsparungsdatensatz enthält beispielsweise Angaben zu den für ein Gebäude installierbaren Komponenten, um Energiekosten und $CO_2$ einzusparen. Es können beispielsweise die benötigten PV-Anlagen und energieeffiziente Klimageräte mit Typ und Preis angegeben werden. Ferner kann ein kostengünstiger Stromtarif mit einem vergleichsweise geringen Anteil fossiler Energieträger gelistet sein, der für das Gebäude abgeschlossen werden sollte.

Ein Scraping-Werkzeug ist ein übliches Softwareprogramm, um Webseiten und öffentlich einsehbare Datenbanken nach Informationen zu durchforsten. Dieser Ansatz ist z.B. auf Wikipedia beschrieben (permanenter Link: https://en.wikipedia.org/w/index.php?title=Web_scraping&oldid=1207633199).

Als finaler Schritt des Verfahrens kann beispielsweise der Kunde bzw. Betreiber des Gebäudes die im Energieeinsparungsdatensatz ermittelten Maßnahmen wie z.B. eine Nachrüstung von PV-Anlagen und einen Wechsel eines Stromtarifs vornehmen. Beispielsweise ermöglicht das erfindungsgemäße Verfahren auch den Abschluss von sogenannten Performance-Verträgen, bei denen die nachgerüsteten Assets wie PV-Anlagen im Eigentum eines Serviceanbieters verbleiben, wobei dem Kunden gegen eine Servicegebühr für eine mehrjährige Laufzeit eine festgesetzte Energie- und/oder Kosteneinsparung garantiert wird. Dies ist ein besonderer Vorteil der Erfindung, weil damit die Komplexität und die Risiken sowie die Wartung von Komponenten einer Energieoptimierung von Gebäuden komplett von einem Kunden wie einem Ladenbetreiber auf einen technisch versierten Serviceanbieter ausgelagert werden kann.

Bisherige Methoden zur techno-ökonomischen Berechnung und Energieeinsparungs-Angebote ("ECM-Angebote") sind halbautomatisiert und erfordern eine Benutzerüberwachung. In der Regel erhalten sie Daten aus einer oder mehreren externen Quellen, z. B. Lastprofile aus Datenbanken, Tarifdaten, usw. Die Integration dieser Daten erfordert Benutzereingaben. Der neuartige Schritt dieser Erfindung ist die Automatisierung dieses Prozesses, einschließlich der folgenden technischen Aspekte:

1. Vollautomatische Simulation mit Eingaben aus mehreren APIs: es wird eine automatisierte Softwaregestützte Methode vorgeschlagen, um Informationen aus verschiedenen Modulen und APIs anzufordern, zu verarbeiten, zu speichern und zu verbreiten.
Das Hauptunterscheidungsmerkmal zu bisherigen Ansätzen ist der vollständige Umfang des Systems. Es gibt Teillösungen für das Problem, aber diese sind nicht vollständig automatisiert (z.B. ausgehend von Internet-Scraping) und kombinieren einen sehr begrenzten Domain-Aspekt.
2. Vollautomatische Validierung der Ergebnisse, Kalibrierung der Datenquellen gegeneinander und Propagierung eines Datenqualitätsmaßes über die Module. Beispiele hierfür sind:

- Dachgröße aus Luftbildern vs. aus Flurstücksdaten, Auswahl der Tarifdaten unter Berücksichtigung des Lastverhaltens,
- Detektion vorhandener PV-Anlagen: Anhand von Informationsquellen zur Detektion vorhandener PV-Anlagen (Luftbilder oder Satellitenbilder) meldet die "Max. PV-Berechnung" entweder die mögliche Installation als ECM, wenn keine PV vorhanden ist, oder die aktuelle Anlagengröße als Eingabe für das Basisszenario in der technisch-wirtschaftlichen Berechnung.
- Validierung und Kalibrierung von Lastprofilen mit monatlichen Energierechnungen

3. Automatisierte Programmierung für das Baustellensteuerungssystem auf der Grundlage des entworfenen Systems und der Berechnung in der technisch-wirtschaftlichen Optimierung.
4. Verarbeitung natürlicher Sprache für Tarifdaten und Auswahl und Anwendbarkeit finanzieller Anreize.

In einer bevorzugten Ausführungsform des computerimplementierten Verfahrens wird als Ergebnis der Co-Simulation ein Energieeinsparungsdatensatz an eine dem Gebäude zugeordnete Kontrolleinrichtung der Energieversorgung gesendet. Dies ist ein Vorteil, weil mit der Bereitstellung von Steuerparametern an einen lokalen Kontroller energie- und Kosteneinsparungen im laufenden Betrieb erzielt werden können.

In einer bevorzugten Ausführungsform des computerimplementierten Verfahrens stellt der Energieeinsparungsdatensatz eine Parametrierung von Energieerzeugern und Verbrauchern bereit. Dies ist ein Vorteil, weil beispielsweise steuerbare Verbräuche für Heizungen und oder Klimageräte teilweise oder in Gänze auf Zeiträume günstig verfügbarer Energie verlagert werden können. Beispielsweise scheint tagsüber die Sonne auf die Solarmodule. Ferner kann es Zeitfenster geben, an denen zu einer bestimmten Tageszeit elektrische Energie besonders kostengünstig eingekauft werden kann.

In einer weiteren bevorzugten Ausführungsform des computerimplementierten Verfahrens weisen die Energieerzeuger und Verbraucher mindestens eine der folgenden Anlagen auf: Photovoltaik-Anlage, Batterieelektrischer Energiespeicher, Klimaanlage, Heizungsanlage, Wärmespeicher, Kältespeicher. Dies ist ein Vorteil, weil die Anlagen besonderen Einfluss auf die Energiekosten und den Treibhausgasausstoß haben.

In einer weiteren bevorzugten Ausführungsform des computerimplementierten Verfahrens umfasst der Kundendatensatz zumindest die postalische und/oder geographische Adresse des Gebäudes, und es werden anhand der Adresse Luft- oder Satellitenaufnahmen des Gebäudes ermittelt und derart ausgewertet, dass Gebäudeinformationen als Gebäudedatensatz bereitgestellt werden. Dies ist vorteilhaft, weil auf diese Weise Informationen über die Gebäude automatisiert ermittelt werden können.

In einer weiteren bevorzugten Ausführungsform des computerimplementierten Verfahrens weisen die Gebäudeinformationen mindestens eine der folgenden Informationen auf: Dachgröße, Dachneigung, Ausrichtung des Dachs bzgl. der Himmelsrichtung, Größe des Parkplatzes für Fahrzeuge, Größe bereits installierter Photovoltaikanlagen, Anzahl und Größe bereits installierter Heizungs-, Kühlungs- oder Klimatisierungssystems. Dies ist vorteilhaft, weil auf diese Weise Informationen bereits vor Ort installierte Anlagen gewonnen werden können.

In einer weiteren bevorzugten Ausführungsform des computerimplementierten Verfahrens wird in dem Fall, dass bereits Photovoltaikanlagen installiert sind, eine Spitzeneinspeiseleistung für die Photovoltaikanlagen geschätzt, und in dem Fall, dass keine Photovoltaikanlagen installiert, wird anhand einer Dachgröße und/oder einer Dachneigung eine Spitzeneinspeiseleistung für installierbare Photovoltaikanlagen geschätzt. Dies ist vorteilhaft, weil die Spitzeneinspeiseleistung bzw. Peak- Leistung ein wichtiger Faktor in der weiteren Berechnung einer optimierten Energieversorgung ist.

In einer weiteren bevorzugten Ausführungsform des computerimplementierten Verfahrens werden anhand der Adresse Gebäudeinformationen als Gebäudedatensatz bereitgestellt, indem eine Grundstücksdatenbank abgefragt wird, wobei die Gebäudeinformationen mindestens eine der folgenden Informationen aufweisen: Grundstücksgröße, Anzahl existierender Gebäude, Grundfläche existierender Gebäude, Nutzfläche existierender Gebäude, Alter existierender Gebäude. Dies ist vorteilhaft, weil auf diese Weise Informationen über die Gebäude automatisiert ermittelt werden können.

In einer weiteren bevorzugten Ausführungsform des computerimplementierten Verfahrens wird anhand der Dachgröße und der Grundfläche eine Gebäudegröße verifiziert, indem bei Überschreiten eines Schwellenwertes für eine Abweichung zwischen Dachgröße und Grundfläche die Dachgröße als Gebäudegröße und bei Unterschreiten des Schwellenwertes für die Abweichung ein Mittelwert aus Dachfläche und Grundfläche als Gebäudegröße verwendet wird. Dies ist ein Vorteil, weil auf diese Weise zu große Abweichungen vom realen Gebäude vermieden werden.

In einer weiteren bevorzugten Ausführungsform des computerimplementierten Verfahrens wird anhand der Gebäudedatensätze aus einer Lastprofildatenbank ein vergleichbares Lastprofil ausgewählt, und anhand des vergleichbaren Lastprofils ein Energieverbrauch des Gebäudes geschätzt wird. Dies ist vorteilhaft, weil auf diese Weise Informationen über den Energieverbrauch des Gebäudes automatisiert ermittelt werden können.

In einer weiteren bevorzugten Ausführungsform des computerimplementierten Verfahrens wird anhand des geschätzten Energieverbrauchs und eines Energiemixes des das Gebäude versorgenden Energieversorgers ein Treibhausgasausstoß berechnet. Dies ist ein Vorteil, weil auf diese Weise auch die Umweltverträglichkeit des eingekauften Stromes berücksichtigt werden kann.

In einer weiteren bevorzugten Ausführungsform des computerimplementierten Verfahrens wird anhand des Kundendatensatzes aus einer Wetterdatenbank ein Wetterprofil für mindestens eine geographische Adresse mit einer vorbestimmten zeitlichen Auflösung bereitgestellt. Das Wetterprofil ermöglicht über einen längeren Zeitraum wie z.B. Tage, Wochen, Monate oder gar Jahre detaillierte Messwerte für die Sonneneinstrahlung, Regen und die Umgebungstemperatur heranzuziehen. Die vorbestimmte zeitliche Auflösung kann beispielsweise 10 min, 15 min, 30 min oder bevorzugt 1 Stunde sein. Sie kann aber auch 6 Stunden oder 8 Stunden betragen.

In einer weiteren bevorzugten Ausführungsform des computerimplementierten Verfahrens wird für eine Vielzahl von vergleichbaren Gebäuden, die dem gleichen Kunden zugeordnet sind, jeweils automatisiert ein Energieeinsparungsdatensatz ermittelt. Dies ist ein Vorteil, weil auf diese Weise einfach und kostengünstig mit geringem Aufwand ein Energieverbrauch z.B. einer kompletten Ladenkette optimiert werden kann. Eine solche Optimierung vieler Standorte war aufgrund des hohen manuellen Aufwands und der damit verbundenen Kosten für die Projektierung bisher nicht möglich.

An die Erfindung stellt sich ferner die Aufgabe, eine Anordnung anzugeben, mit der vergleichsweise einfach und automatisiert eine Optimierung von Gebäuden durchführbar ist.

Die Erfindung löst diese Aufgabe durch eine Anordnung gemäß Anspruch 14. Bevorzugte Ausführungsformen sind in den Ansprüchen 15 und 16 angegeben. Es ergeben sich sinngemäß die gleichen Vorteile wie eingangs für das erfindungsgemäße Verfahren erläutert.

An die Erfindung stellt sich außerdem die Aufgabe, ein Computerprogramm anzugeben, mit dem vergleichsweise einfach und automatisiert eine Optimierung von Gebäuden durchführbar ist.

Die Erfindung löst diese Aufgabe durch ein Computerprogramm gemäß Anspruch 17. Es ergeben sich sinngemäß die gleichen Vorteile wie eingangs für das erfindungsgemäße Verfahren erläutert.

Es wird im Folgenden ein bevorzugtes Ausführungsbeispiel der Erfindung erläutert.

Die Methode beginnt mit grundlegenden Informationen über den analysierten Standort. Die Daten enthalten mindestens den Namen des Kunden/Standorts und können auch zusätzliche Informationen wie Standort, Art des Kunden (Wohnen / Gewerbe / Industrie) enthalten.

Im Folgenden werden Ausgaben der jeweiligen Schnittstellen (I1-I12) und die Verarbeitung einzelner Verfahrensschritte beschrieben. Dabei handelt es sich um eine schematische Übersicht und keine konkrete Implementierung in Softwarecode, die aber anhand der nachfolgenden Erläuterungen leicht für einen Fachmann umzusetzen wäre.

I1. Der Kundenname wird z.B. durch Eingabe bereitgestellt.

Es wird anschließend ein sogenanntes Internet-Scraping eingesetzt. Dabei kommen Methoden und Werkzeuge für Web-(Internet-)Scraping zum Einsatz, um öffentlich verfügbare Informationen über den Kunden auf einer Website zu finden. Web Scraping verwendet Software-Roboter, die auf das World Wide Web zugreifen und Webseiten finden, deren Daten abrufen und daraus Informationen extrahieren. Die Daten werden nach Schlüsseln wie dem Kundennamen und Informationen, die von Interesse sind, wie z.B. Adresse und Öffnungszeiten, gefiltert. Solche Programme sind beispielsweise als Dienstleistungen von Anbietern wie Alphabet (Google und Google Maps), ScrapeHero (www.scapehero.com) und Bright Data Web Scraper (www.brightdata.com) bekannt.

Als Ausgabe des Internet-Scraping werden z.B. bereitgestellt:

I2. Adresse, Öffnungszeiten, Kundentyp.

Ein Kundentyp kann dabei z.B. eine Ladenkette oder ein Anlagentyp sein.

Als nächster Schritt können Gebäudeinformationen aus Bildern gewonnen werden. Mit der Adresse eines Standorts eines Kunden kann auf Luftbilddatenbanken (mit Satellit, Flugzeug oder Drohne aufgenommen) zugegriffen werden, um Gebäude zu identifizieren und mit Hilfe von Bildverarbeitungstechnologie Gebäude und ihre Eigenschaften zu identifizieren. Hierbei kann Mustererkennungssoftware verwendet werden.

Unternehmen, die solche Dienste anbieten, sind z.B. Nearmap (https://www.nearmap.com/us/en) und AddressCloud (https://www.addresscloud.com). Das Berechnungstool greift auf die API solcher Dienste zu und fordert die Gebäude und die Gebäudeinformationen für die Adresse von I2 an. Die Antwort der API wird dann den anderen Modulen über I3 zur Verfügung gestellt und enthält die folgenden Informationen:

I3. Dachgröße und Stellplätze, vorhandene PV-Anlagen auf dem Dach und deren Größe, vorhandene HVAC-Anlagen, Dachneigung und -ausrichtung.

Als Nächstes werden Informationen aus einer Flurstücksdatenbank erstellt. Anbieter solcher Informationen könnten Precisely (https://www.precisely.com/) oder ATTOM (http://www.attomdata.com/) sein. Das Berechnungstool greift auf die API solcher Dienste zu und fordert die Informationen über das Paket für die Adresse von I2 an. Die Antwort der API wird dann den anderen Modulen über I4 zur Verfügung gestellt und enthält die folgenden Informationen:

I4. Flurstücksgröße, vorhandene Gebäude und für die Gebäude ihr Alter und ihre Größe.

Eine Berechnung der maximalen PV- Leistung kann folgen. Dieses Modul berechnet aus I3 die maximale Photovoltaik (PV)-Leistung, die auf dem Dach des Gebäudes installiert werden kann. Wenn auf dem Dach bereits PV vorhanden ist, kann keine zusätzliche PV installiert werden. Es kann aus der Geometrie der installierten PV-Anlage die installierte PV-Spitzenleistung (Peakleistung) ermittelt werden. Die Berechnung kann z.B. mit PVlib (https://pvlib-python.readthedocs.io/) oder kommerzieller Auslegungssoftware wie HelioScope (https://helioscope.aurorasolar.com/) durchgeführt werden.

Wenn PV noch nicht auf dem Dach vorhanden ist, wird die verfügbare Fläche, auf der PV-Module installiert werden können, als Differenz zwischen der Dachgröße abzüglich des Platzes, der von Dachobjekten wie HLK-Geräten eingenommen wird, berechnet. Anhand der verfügbaren Fläche für PV-Anlagen kann dann mit den oben genannten Tools die maximale Größe der PV-Anlage und die Spitzenleistung ermittelt werden. Dieser Schritt gibt aus:

I5. Spitzenleistung der vorhandenen PV-Anlage (falls vorhanden) oder mögliche PV-Spitzenleistung, die installiert werden kann.

Im nächsten Schritt wird das Gebäude validiert anhand der Gebäudedateninformationen aus I3 und I4. Wenn mehrere Gebäude in I3 vorhanden sind, wird das größte Gebäude von I3 verwendet. Gleiches gilt für I4, wenn mehrere Gebäude in I4 vorhanden sind, wird das größte Gebäude von I4 verwendet.

Wenn sowohl I3 als auch I4 keine Informationen zur Gebäudegröße haben, ist eine Berechnung nicht möglich.

Wenn die Gebäudegröße I4 fehlt, wird die Gebäudegröße aus I3 benutzt.

Wenn sowohl I3 als auch I4 die Gebäudegröße enthalten und die Differenz kleiner als ein bestimmter Schwellenwert (z. B. 10 %) ist, wird als Gebäudegröße der Durchschnitt der Gebäudegröße aus I3 und I4 verwendet. Wenn die Differenz größer als der Schwellenwert ist, wird Sie die Größe von I3 eingesetzt, weil diese zuverlässiger ermittelt wurde. Aus Ausgabe dieses Schrittes wird bereitgestellt:

I6. Größe des Gebäudes.

Nun werden Lastprofile (Energieverbrauch) für das Gebäude anhand von Gebäudeeigenschaften wie z.B. Adresse (I2), Gebäudegröße (I6), Gebäudealter (I4) und Kundentyp (I2) ermittelt. Für typische Lastprofile stehen Datenbanken zur Verfügung, kategorisiert nach eingangs aufgezählten Merkmalen. Beispiele sind die Comstock-Datenbank von NREL (https://www.nrel.gov/buildings/comstock.html) für Gewerbebauten und Resstock für Wohngebäude (https://resstock.nrel.gov/) sowie von FfE in Deutschland (https://opendata.ffe.de/).

Die Vorgehensweise gestaltet sich wie folgt. Zunächst wird in der Datenbank nach dem Profil gesucht, das den oben genannten Gebäudemerkmalen am ehesten entspricht, d.h. am wenigsten davon abweicht. Dazu wird ein Bereich der zulässigen Abweichung für die jeweiligen Merkmalen festgelegt. Z.B. sollte das Profil muss für eine Adresse sein, die nicht weiter als 20 km von der Standortadresse entfernt ist. Ferner sollte die Gebäudegröße einen Unterschied von höchstens +/- 20 % aufweisen, das Baualter darf nicht mehr als 5 Jahre abweichen und der Kundentyp muss übereinstimmen (Wohnen / Gewerbe / Industrie). Wenn es sich um Gewerbe/Industrie handelt, muss die jeweilige Branche (z.B. Baumarkt) übereinstimmen. Als Ausgabe wird bereitgestellt:

I7: Lastprofil: Energieverbrauch für ein typisches Jahr, abgetastet mit einer zeitlichen Auflösung von mindestens 1 Stunde.

Weiterhin können Tarifdaten für den Kundenstandort anhand dort verfügbarer Energietarife bestimmt werden. Es werden hierfür die angegebene Adresse (I2) und die Merkmale des Energieprofils (I7) verwendet. Es gibt offene und kommerzielle Datenbanken für Energietarife: OpenEI von NREL (https://apps.openei.org/USURDB/), Arcadia Signal (https://www.arcadia.com/products/signal), Verivox (https://www.verivox.de/partnerprogramm/). Das Berechnungstool greift auf die API solcher Dienste zu, fragt nach Informationen über die Tarife für eine bestimmte Adresse (I2) und filtert diese nach den Merkmalen des Energieprofils, z. B. Jahresenergieverbrauch und Spitzenbedarf. Die Antwort der API wird dann den anderen Modulen über I8 zur Verfügung gestellt und enthält die folgenden Informationen:

I8. Versorgungsunternehmen, Energietarifstruktur (Energie, Bedarf, Fixkosten, saisonale und zeitliche Besonderheiten, Abrechnungsart, Verbrauch/Erzeugung) und die entsprechenden Kosten/Erlöse.

Im nächsten Schritt wird ein CO2-Anteil des über das Energienetz verfügbaren Stroms ermittelt. Dieser hängt vom Strommix aus fossilen Energieträgern, Kernkraft und erneuerbaren Energieträgern (Windkraft, Wasserkraft, PV und Biogas, usw.) ab.

Anschließend wird für das Versorgungsunternehmen (I8) der CO2-Gehalt der Energie berechnet. Für den CO2-Gehalt der von den Energieversorgern bereitgestellten Energie gibt es offene und kommerzielle Daten, z.B. Singularity (https://singularity.energy/), Electricity Maps (https://www.electricitymaps.com/). Für typische CO2-Gehaltsdaten kann die Datenbank nach Versorgungs- und Energietyp gefiltert werden, und es werden folgende Informationen bereitgestellt:

I9. CO2-Gehalt pro verbrauchter kWh Energie, als Zeitreihe oder Jahreswert.

Ferner werden typische Wetterdaten für den Standort (vgl. I2) gesucht. Das Berechnungswerkzeug greift auf die API von Diensten wie Meteonorm (https://meteonorm.com/) zu und fordert typische meteorologische Jahresdaten (Temperatur, Einstrahlung) für den Standort (I2) an:

I10. Wetterdaten: Temperatur, Bestrahlungszeitauflösung mindestens stündlich

Dann kann eine CAPEX/OPEX - Kostendatenbank für Energiesparmaßnahmen (ECM) für den Standort (I2) abgefragt werden. Für die techno-ökonomische Berechnung sind die Kosten für die Modernisierungen und für die Finanzierung des Projekts wichtig. Hierbei können z.B. Anschaffungs-, Wartungs- und Entsorgungskosten für nachzurüstende Anlagen wie PV-Anlagen berücksichtigt werden.

Diese Kosten können auf der Grundlage öffentlich zugänglicher Datenbanken, z. B. NREL (https://remdb.nrel.gov/), eingerichtet werden. Es werden bereitgestellt:

I11. Kosten für Energieeinsparungsmaßnahmen.

Auch finanzielle Anreize für Modernisierungen an dem Standort (aus I2) unter Berücksichtigung der Gebäudeeigenschaften (I4, I6) und der Versorgung (I8) sollten erfasst werden.

Finanzielle Anreize können aus verschiedenen Quellen abgerufen werden, über APIs oder Web-Scraping. Beispielsweise sind Incentifind (https://www.incentifind.com/) oder die Websites verschiedener Regierungsbehörden geeignete Informationsquellen. Es können z.B. Förderprogramme für die Installation von PV-Anlagen vorliegen. Die API kann die Ergebnisse anhand verschiedener Parameter wie Standort, Gebäudegröße, Alter und Art des Energieverbrauchs filtern. Die Ergebnisse sind:

I12. Wirtschaftliche Anreize und Konditionen hierfür, z.B. ECM-Installation

Ein wesentlicher weiterer Schritt ist eine ECM-Dimensionierung und Dispatch-Optimierung. Energiesparmaßnahmen (ECM) werden unter Berücksichtigung der Eingaben aus den Datenverarbeitungsmodulen optimiert. Die Dimensionierung und Verteilung von Energiesparmaßnahmen (ECM) ist das zentrale Berechnungswerkzeug für die Eingaben aus den Datenverarbeitungsmodulen. Mittels der techno-ökonomischen Dimensionierung werden berechnet:

- Bedarfsseitige ECMs, z. B. Modernisierung von Heiz-/Kühlgeräten, Beleuchtung
- Versorgungsseitige ECMs, z. B. Installation von PV-Erzeugung, Energiespeicherung
- Berechnung von Cashflow- und Finanzkennzahlen

Für die Berechnung werden modernste Werkzeuge verwendet, z.B. Siemens PSS-DE oder das System Advisor Model von NREL. Die Ergebnisse der Optimierung sind:
I13. Größen, Typen und Parameter für die ECMs, und/oder Finanzkennzahlen für Investitionen, und/oder Steuerungs- und Versandparameter für die Online-Steuerung.

Ein anderer Aspekt ist eine durchgehend hohe Datenqualität in jedem Schritt. Dafür muss die Datenqualität und ihre Ausbreitung durch die verschiedenen Quellen untersucht werden. Es werden 3 Kategoriestufen für die Datenqualität definiert: niedrig, mittel und hoch.

Die anfängliche Datenqualität kann z.B. wie folgt sein, wenn sie aus dem API-Aufruf gewonnen wird (z.B. Daten aus der Bildverarbeitung (Building info from images) kommen mit einem Wahrscheinlichkeitsfaktor). In diesem Fall entspricht die Startebene der API-Antwort.

Die Datenqualität kann auch auf einen Wert festgelegt werden:

- niedrig: für den Fall, dass die Daten aus einer Datenbank mit Standardwerten (z.B. Lastprofile, Kosten) stammen.
- mittel: wenn die Daten aus spezialisierten Internetquellen stammen, die zuverlässig sind (Paketdaten, Internet-Scraping mit bestimmten Kundendaten).

o hoch: wenn Daten aus Kundendaten gewonnen werden.

Durch die Verarbeitung über die Module kann die Datenqualität des Ergebnisses erhöht oder verringert werden: beispielsweise erhöht eine erfolgreiche Kreuzvalidierung von Daten die Datenqualität um eine Ebene, z.B. bei einem Validierungsgebäude für eine Gebäudeoberfläche. Eine nicht erfolgreiche Kreuzvalidierung verringert dagegen die Datenqualität. Bei der Verarbeitung eines Moduls mit mehreren Eingängen hat der Ausgang stets die niedrigste Datenqualität der Eingänge.

Ein weiterer Aspekt der Erfindung ist ein automatisiertes Senden von Steuerungsparametern an die eine Standortsteuerung.

Das ECM-Modul zur Dimensionierung und "dispatch"-Optimierung umfasst eine Steuerungsstrategie der Anlagen, um den Standort zu simulieren und Leistungsindikatoren zu berechnen. Die optimalen Parameter der Steuerung sind ein Ausgang des Moduls. Diese Parameter werden an den Standortcontroller gesendet, so dass die tatsächliche Leistung des Standorts mit der technisch-wirtschaftlichen Berechnung übereinstimmt.

Ferner erfolgt eine Weiterverarbeitung in den Modulen, insbesondere eine Lastprofilvalidierung und Anpassung auf Basis von Rechnungsdaten. In einigen Fällen können Rechnungsdaten für Kunden automatisch abgerufen werden. Diese Rechnungen enthalten wertvolle Informationen über die abgerechnete elektrische Last, wie z. B. die durchschnittliche monatliche Last (Energie) und den Spitzenbedarf (Leistung). Diese Informationen können automatisch zur Anpassung des Lastprofils für die techno-ökonomische Berechnung verwendet werden. Es kann beispielsweise eine einfache lineare Transformation des Lastprofils vorgenommen werden, um die Mittel- und Spitzenwerte abzugleichen. Man kann festlegen, dass das Lastprofil ein Vektor L mit stündlich abgetasteten Werten für einen Monat (N = 720 Werte für einen Monat von 30 Tagen) ist, und dass L_load die Summe der Werte (monatliche Auslastung) ist, und dass L_demand der höchste Wert (monatlicher Bedarf) ist.

Nimmt man weiter an, dass die monatliche Auslastung der Rechnung L_bill_load und der monatliche Bedarf L_bill_demand ist, so lautet die lineare Transformation, die dem gleichen Bedarf und der gleichen Last entspricht:

$$L\_new = Alpha * L + Beta,$$

Wobei L_new die angepasste Last auf der Grundlage der Rechnungsdaten ist und

$$alpha = (N*L\_bill\_demand - L\_bill\_load) / (N*L\_demand - L\_load)$$

und

$$Beta = L\_bill\_demand – Alpha * L\_demand$$

Ist. Dabei ist zu beachten, dass N * Demand > load sowohl für die Rechnung als auch für das Lastprofil ist, so dass Alpha immer definiert und positiv ist. Der Fall, dass das

Lastprofil immer konstant ist, also die N * Nachfrage = Last, wird nicht berücksichtigt. Das neue Lastprofil L_new ersetzt anschließend die Lastdaten aus I7 und der Indikator für die Datenqualität wird erhöht.

Die Weiterverarbeitung in den Modulen beinhaltet ferner, Incentives und Tarifauswahl mit Natural Language Processing auszuwerten. Viele Dokumente im Zusammenhang mit Energiesparmaßnahmen liegen nach wie vor nur in Textform vor, die nicht formalisiert ist. Einige der Antworten, die über die oben aufgezählte API erhalten werden können, liegen in Textform vor. Beispiele hierfür sind die Anwendbarkeitsbedingungen für die Tarife und die finanziellen Anreize für die ECMs.

Für solche Fälle können Werkzeuge der Verarbeitung natürlicher Sprache (NLP) zur Formalisierung von Texten von Tarifen und Anreizen vorgesehen werden. NLP-Tools sind als Software as a Service verfügbar oder über APIs zugänglich: Google Cloud NLP (https://cloud.google.com/natural-language?hl=en), IBM Watson (https://www.ibm.com/watson), Amazon Comprehend (https://aws.amazon.com/comprehend/) sind bekannte Beispiele.

Für das Training dieser Machine-Learning-Tools können Daten aus den oben genannten Quellen (z.B. "Incentifind", "Arcadis Signal") bereitgestellt werden, die manuell annotiert werden. Angesichts der relativ formalen und sich wiederholenden Texte, die verarbeitet werden müssen, ist eine kleine Anzahl von Trainingsdatensätzen für ein initiales Training ausreichend. Liegen Rechnungen von Kunden vor, können diese für eine automatisierte Generierung von annotierten Daten für die Tarifauswahlverarbeitung verwendet werden. Der Ausgang dieses Schritts wird in den entsprechenden Schnittstellen I8 und I12 verwendet.

Beispielsweise kann ein sog. "Large Language Model (LLM)", d.h. ein Neuronales Netzwerk mit Transformer-Architektur, eingesetzt werden. Die Komplexität der vorliegenden Daten in natürlicher Sprache bzw. als Text für die zu untersuchende Fragestellung wären, wenn überhaupt, nur mit sehr komplexen regelbasierten Expertensystemen erfassbar. Daher macht der Einsatz künstlicher Intelligenz Sinn. Es kann mittels der künstlichen Intelligenz eine Transformation der analysierten Texte vorgenommen werden, um strukturierte mathematische Modelle für die Co-Simulation zu erhalten.

In einer Weiterbildung dieses Ansatzes können auch simulierte Daten bzw. Texte für ein Training der künstlichen Intelligenz erzeugt werden.

Die gewonnenen mathematischen Modelle können einem Plausibilitätscheck anhand von Beispielrechnungen unterzogen werden, um das Ergebnis des machine-learning Schrittes zu überprüfen.

Zusammengefasst stellt das eingangs erläuterte Ausführungsbeispiel modernste Methoden zur techno-ökonomischen Berechnung dar, die über bisherige ECM-Angebote, die sind halbautomatisiert sind und eine Benutzerüberwachung erfordern, hinaus. In der Regel erhalten die bisherigen Ansätze Daten aus einer oder mehreren der oben aufgezählten Quellen, z. B. Lastprofile aus Datenbanken, Tarifdaten, aber die Integration dieser Daten erfordert Benutzereingaben. Der neuartige Schritt dieser Erfindung ist die Automatisierung dieses Prozesses, einschließlich der folgenden technischen Aspekte:

1. Vollautomatische Simulation mit Eingaben aus mehreren APIs - es wird ein technisches System vorgeschlagen, um Informationen aus verschiedenen Modulen und APIs anzufordern, zu verarbeiten, zu speichern und zu verbreiten. Ein wesentlicher Unterschied zu bisherigen Ansätzen ist es, in einem vollständigen Umfang, einschließlich mehrerer Quellen, Daten für die technisch-ökonomische Co-Simulation automatisiert bereit zu stellen und auszuwerten.

2. Vollautomatische Validierung der Ergebnisse, Kalibrierung der Datenquellen gegeneinander und Propagierung eines Datenqualitätsmaßes über die Module. Beispiele hierfür sind:

- Dachgröße aus Luftbildern oder aus Flurstücksdaten, Auswahl der Tarifdaten unter Berücksichtigung des Lastverhaltens,
- Detektion vorhandener PV-Anlagen: anhand von Informationsquellen zur Detektion vorhandener PV-Anlagen (Luftbilder) meldet die "Max. PV-Berechnung" entweder die mögliche Installation als ECM (wenn keine PV vorhanden ist), oder die aktuelle Anlagengröße als Eingabe für das Basisszenario in der technisch-wirtschaftlichen Berechnung.
- Validierung und Kalibrierung von Lastprofilen mit monatlichen Energierechnungen.

3. Automatisierte Programmierung für das Baustellensteuerungssystem auf der Grundlage des entworfenen Systems und der Berechnung in der technisch-wirtschaftlichen Optimierung. Wesentliche Parameter eines site-Energiemanagementsystems (d.h. eines lokalen "controllers") sind in der techno-ökonomischen Simulation bereits vorgegeben. Beispiele hierfür sind der Tarif, Energiekomponentengrößen und technische Randbedingungen, maximalw Leistung, etc. Diese Daten können über ein Export-File / Interface in den Controller übernommen und genutzt werden. Etwaige fehlende Parameter werden nachträglich ergänzt oder sind als Standardwerte hinterlegt.

4. Verarbeitung natürlicher Sprache für Tarifdaten und Auswahl und Anwendbarkeit finanzieller Anreize

Im Folgenden wird die Erfindung in schematischer Darstellung erläutert. Dabei zeigen die

Figur 1     eine Übersicht der für die Erfindung benötigten Inputs sowie der ermittelten Outputs, und

Figur 2     eine Detailansicht der für die Erfindung genutzten Komponenten.

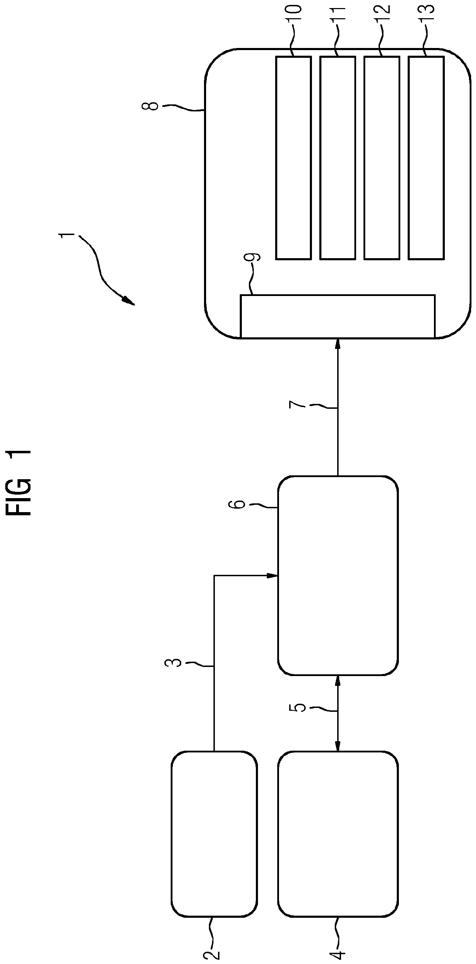

Die Figur 1 zeigt eine Übersicht 1 der für die Erfindung benötigten Inputs 2,4 sowie der ermittelten Outputs 7. Kundendaten 2 werden über eine erste Datenkommunikationsverbindung 3 an eine computerbasierte technisch ökonomische Co-Simulation 6 übermittelt. An die Co-Simulation werden ferner aus Datenquellen, die öffentlich oder kommerziell gegen Geldzahlung verfügbar sind, Daten 4 über eine zweite Datenkommunikationsverbindung 5 übermittelt. Als Ergebnis der Co-Simulation werden über eine dritte Datenkommunikationsverbindung 7 Parameter an eine Steuereinrichtung 9 eines Gebäudes, bzw. einer Anlage 8 übermittelt. Das Gebäude 8 weist beispielsweise eine PV-Anlage 10, einen batterieelektrischen Speicher 11, eine HVAC-Einheit 12 oder einen Wärmespeicher, bzw. Kältespeicher 13 auf.

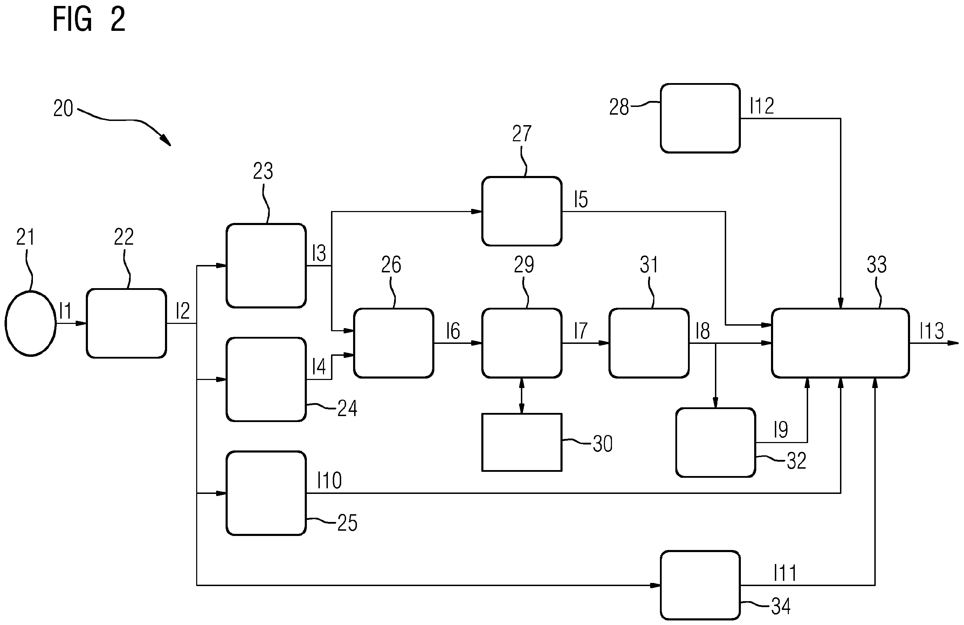

Die Figur 2 zeigt eine Detailansicht 20, der für die Erfindung genutzten Komponenten 21-33. Die gezeigten Schnittstellen I1-I13 entsprechen dabei den eingangs im Ausführungsbeispiel unter der gleichen Nomenklatur beschriebenen Aspekten.

Basisdaten 21 werden über eine Schnittstelle I1 an ein Internet-Scraping-Tool 22 übermittelt. Dieses kommuniziert die Ergebnisse der Suche über eine Schnittstelle I2 an Module 23, 24, 25, 34. Das Modul zur Bildauswertung 23 kommuniziert Ergebnisse wie beispielsweise eine Dachfläche über die Schnittstelle I3 weiter an einerseits ein Modul zur Kalkulation der maximal installierbaren PV-Leistung 27 und andererseits zu einer Gebäudevalidierung bzw. einem Validierungsmodul 26. Die Flurstückdatenbank 24 ermittelt anhand des Inputs I von I2 Ergebnisse zum Grundstück und übermittelt diese über die Schnittstelle I4 an das Validierungsmodul 26.

Das Betadaten-Modul 25 übermittelt Ergebnisse zu typischen Lichteinstrahlungen und Temperaturen über die Schnittstelle I10 weiter an das ECM-Optimierungsmodul, an das auch das Modul zur Berechnung von Capex/Opex-Kosten 34 über die Schnittstelle I11 Daten übermittelt. Die Ergebnisse der Berechnung der maximalen PV-Anlagengröße 27 werden über eine Schnittstelle I5 an das ECM-Modul 33 übermittelt. Auch das Modul für finanzielle Incentives, bzw. Anreize 28 übermittelt über die Schnittstelle I12 Daten an das ECM-Modul 33.

Über das Validierungsmodul 26 werden Ergebnisse über die Schnittstelle I6 an das Lastprofilmodul 29 übermittelt, das als weiteren Input Ergebnisse aus einem Rechnungsauswertungsmodul 30 erhält. Das Lastprofilmodul 29 übermittelt Ergebnisse über die Schnittstelle I7 an das Tarifdatenmodul 31, das wiederum Ergebnisse über die Schnittstelle I8 bereitstellt. Diese Ergebnisse werden einerseits dem ECM-Modul 33 direkt oder über das CO2 bzw. Strommixmodul für das Energienetz 19 über eine Schnittstelle I9 dem ECM-Modul 33 zur Verfügung gestellt. Die Ergebnisse, die das ECM-Modul 33 aus den Input-Daten über die Schnittstellen I12, I5, I8, I9, I10 erhält, werden über die Schnittstelle I13 als Ausgabe bereitgestellt.

**Patentansprüche**

**1.** Computerimplementiertes Verfahren zur Optimierung einer Energieversorgung mindestens eines Gebäudes (8) mittels einer Datenverarbeitungseinrichtung (33), bei dem mittels einer ersten Schnittstelle (I1) ein Kundendatensatz (21) aus einem Kundendatenspeicher empfangen wird, und

mittels mindestens einer zweiten Schnittstelle (I2-I12) Gebäudedatensätze (22-32,34) empfangen werden, und anhand des Kundendatensatzes (21) und der Gebäudedatensätze (22-32,34) eine Co-Simulation, die technische und wirtschaftliche Parameter der Energieversorgung des Gebäudes berücksichtigt, durchgeführt wird, **dadurch gekennzeichnet, dass**
mittels der Datenverarbeitungseinrichtung (33) anhand des Kundendatensatzes (21) die Gebäudedatensätze (22-32,34) ermittelt werden, indem automatisiert eine Internetrecherche mit einem Scraping-Werkzeug (22) und ein Zugriff auf Datenbanken mit öffentlich zugänglichen Informationen ausgeführt werden.

**2.** Computerimplementiertes Verfahren nach Anspruch 1, **dadurch gekennzeichnet, dass** als Ergebnis der Co-Simulation ein Energieeinsparungsdatensatz an eine dem Gebäude zugeordnete Kontrolleinrichtung (9) der Energieversorgung gesendet wird.

**3.** Computerimplementiertes Verfahren nach Anspruch 1 oder 2, **dadurch gekennzeichnet, dass** der Energieeinsparungsdatensatz eine Parametrierung von Energieerzeugern (10,11) und Verbrauchern (12,13) bereitstellt.

**4.** Computerimplementiertes Verfahren nach Anspruch 3, **dadurch gekennzeichnet, dass** die Energieerzeuger und Verbraucher mindestens eine der folgenden Anlagen aufweisen:
Photovoltaik-Anlage (10), Batterieelektrischer Energiespeicher (10), Klimaanlage, Heizungsanlage, Wärmespeicher, Kältespeicher.

**5.** Computerimplementiertes Verfahren nach einem der vorhergehenden Ansprüche, **dadurch gekennzeichnet, dass** der Kundendatensatz (21) zumindest die postalische und/oder geographische Adresse des Gebäudes umfasst, und dass anhand der Adresse Luft- oder Satellitenaufnahmen des Gebäudes ermittelt und derart ausgewertet werden, dass Gebäudeinformationen als Gebäudedatensatz (23) bereitgestellt werden.

**6.** Computerimplementiertes Verfahren nach einem der vorhergehenden Ansprüche, **dadurch gekennzeichnet, dass** die Gebäudeinformationen mindestens eine der folgenden Informationen aufweisen: Dachgröße, Dachneigung, Ausrichtung des Dachs bzgl. der Himmelsrichtung, Größe des Parkplatzes für Fahrzeuge, Größe bereits installierter Photovoltaikanlagen, Anzahl und Größe bereits installierter Heizungs-, Kühlungs- oder Klimatisierungssystems.

**7.** Computerimplementiertes Verfahren nach Anspruch 6, **dadurch gekennzeichnet, dass** in dem Fall, dass bereits Photovoltaikanlagen installiert sind, eine Spitzeneinspeiseleistung für die Photovoltaikanlagen geschätzt wird, und in dem Fall, dass keine Photovoltaikanlagen installiert sind, anhand einer Dachgröße und/oder einer Dachneigung eine Spitzeneinspeiseleistung für installierbare Photovoltaikanlagen geschätzt wird.

**8.** Computerimplementiertes Verfahren nach einem Ansprüche 5 bis 7, **dadurch gekennzeichnet, dass** anhand der Adresse Gebäudeinformationen als Gebäudedatensatz bereitgestellt werden, indem eine Grundstücksdatenbank (24) abgefragt wird, wobei die Gebäudeinformationen mindestens eine der folgenden Informationen aufweisen: Grundstücksgröße, Anzahl existierender Gebäude, Grundfläche existierender Gebäude, Nutzfläche existierender Gebäude, Alter existierender Gebäude.

**9.** Computerimplementiertes Verfahren nach einem Ansprüche 6 bis 8, **dadurch gekennzeichnet, dass** anhand der Dachgröße und der Grundfläche eine Gebäudegröße verifiziert wird, indem bei Überschreiten eines Schwellenwertes für eine Abweichung zwischen Dachgröße und Grundfläche die Dachgröße als Gebäudegröße und bei Unterschreiten des Schwellenwertes für die Abweichung ein Mittelwert aus Dachfläche und Grundfläche als Gebäudegröße verwendet wird.

**10.** Computerimplementiertes Verfahren nach einem der vorhergehenden Ansprüche, **dadurch gekennzeichnet, dass** anhand der Gebäudedatensätze aus einer Lastprofildatenbank (29) ein vergleichbares Lastprofil ausgewählt wird, und anhand des vergleichbaren Lastprofils ein Energieverbrauch des Gebäudes (8) geschätzt wird.

**11.** Computerimplementiertes Verfahren nach Anspruch 10, **dadurch gekennzeichnet, dass** anhand des geschätzten Energieverbrauchs und eines Energiemixes des das Gebäude (8) versorgenden Energieversorgers ein Treibhausgasausstoß (32) berechnet wird.

**12.** Computerimplementiertes Verfahren nach Anspruch 5, **dadurch gekennzeichnet, dass** anhand des Kundendatensatzes aus einer Wetterdatenbank ein Wetterprofil (25) für mindestens eine geographische Adresse mit einer vorbestimmten zeitlichen Auflösung gestellt wird.

**13.** Computerimplementiertes Verfahren nach einem der vorhergehenden Ansprüche, **dadurch gekennzeichnet, dass** für eine Vielzahl von vergleichbaren Gebäuden (8), die dem gleichen Kunden zugeordnet sind, jeweils automatisiert ein Energieeinsparungsdatensatz ermittelt wird.

**14.** Anordnung für eine Optimierung einer Energieversorgung mindestens eines Gebäudes (8) mit einer Datenverarbeitungseinrichtung (33), die ausgebildet ist,

mittels einer ersten Schnittstelle (I1) einen Kundendatensatz (21) aus einem Kundendatenspeicher zu empfangen, und
mittels mindestens einer zweiten Schnittstelle (I2-I12) Gebäudedatensätze (22-32,34) zu empfangen, und anhand des Kundendatensatzes (21) und der Gebäudedatensätze (22-32,34) eine Co-Simulation, die technische und wirtschaftliche Parameter der Energieversorgung des Gebäudes berücksichtigt, durchzuführen, und als Ergebnis der Co-Simulation einen Energieeinsparungsdatensatz an eine dem Gebäude zugeordnete Kontrolleinrichtung (9) der Energieversorgung zu senden,

**dadurch gekennzeichnet, dass**

die Datenverarbeitungseinrichtung (33) ausgebildet ist, anhand des Kundendatensatzes (21) die Gebäudedatensätze (22-32,34) zu ermitteln, indem automatisiert eine Internetrecherche mit einem Scraping-Werkzeug (22) und ein Zugriff auf Datenbanken mit öffentlich zugänglichen Informationen ausgeführt werden.

15. Anordnung nach Anspruch 14, **dadurch gekennzeichnet, dass** die Datenverarbeitungseinrichtung ausgebildet ist, als Ergebnis der Co-Simulation einen Energieeinsparungsdatensatz an eine dem Gebäude zugeordnete Kontrolleinrichtung (9) der Energieversorgung zu senden.

16. Anordnung nach Anspruch 15, **dadurch gekennzeichnet, dass** die Datenverarbeitungseinrichtung ausgebildet ist, für eine Vielzahl von vergleichbaren Gebäuden, die dem gleichen Kunden zugeordnet sind, jeweils automatisiert ein Energieeinsparungsdatensatz zu ermitteln.

17. Computerprogramm, umfassend Befehle, die bei der Ausführung des Programms durch einen Computer diesen veranlassen, das Verfahren nach einem der Ansprüche 1 bis 13 auszuführen.

FIG 1

EP 4 679 340 A1

FIG 2

Europäisches Patentamt

European Patent Office

Office européen des brevets

# EUROPÄISCHER RECHERCHENBERICHT

**Nummer der Anmeldung**

EP 24 18 8029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/076304 A1 (TOTH ATTILA [US] ET AL) 16. März 2017 (2017-03-16) <br> * Absätze [0003] - [0012], [0032] - Absätze [0038], [0042] - [0045] * <br> * Absätze [0048] - [0051], [0062], [0078] - Absatz [0088]; Abbildung 1 * <br> ----- | 1-17 | INV. <br> G06Q10/04 <br> G06Q50/06 |
| X | US 2014/025343 A1 (GREGG DAVID CHARLES [US] ET AL) 23. Januar 2014 (2014-01-23) <br> * Absätze [0002] - [0007], [0024] - Absätze [0037], [0042] - [0048]; Abbildungen 1A-1B * <br> * Absatz [0051] - Absatz [0068] * <br> ----- | 1-17 | |
| X | US 2018/089763 A1 (OKAZAKI TAKESHI [JP]) 29. März 2018 (2018-03-29) <br> * Absätze [0002] - [0011], [0037] - Absätze [0041], [0045] - [0061]; Abbildungen 1-3, 6-7 * <br> * Absatz [0065] - Absätze [0089], [0106] - [0121] * <br> ----- | 1-17 | |
| X | US 2016/048934 A1 (GROSS JOHN NICHOLAS [US]) 18. Februar 2016 (2016-02-18) <br> * Absätze [0006] - [0010], [0085] - Absätze [0121], [0137] - [0147] * <br> * Absatz [0184] - Absätze [0227], [0234] * <br> * Absätze [0247] - [0261], [0288] - Absätze [0341], [0372] - [0393]; Abbildungen 1-5, 11-22 * <br> ----- <br> -/-- | 1-17 | |

**RECHERCHIERTE SACHGEBIETE (IPC)**

G06Q
F24S
G06N
G06F

Der vorliegende Recherchenbericht wurde für alle Patentansprüche erstellt

| Recherchenort | Abschlußdatum der Recherche | Prüfer |
|---|---|---|
| München | 29. November 2024 | Krafft, Gerald |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

**Europäisches Patentamt**
**European Patent Office**
**Office européen des brevets**

# EUROPÄISCHER RECHERCHENBERICHT

**Nummer der Anmeldung**

EP 24 18 8029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/212341 A1 (FATHI HABIB [US] ET AL) 27. Juni 2024 (2024-06-27) * Absätze [0003] - [0008], [0013] - Absätze [0022], [0030] - [0061]; Abbildungen 1-3 * * Absätze [0065] - [0112], [0117] - Absätze [0131], [0139] - [0152] * ----- | 1-17 | |
| A | US 2014/200861 A1 (DEVITO KEVIN [US] ET AL) 17. Juli 2014 (2014-07-17) * Absätze [0002] - [0016], [0088] - Absätze [0105], [0112] - [0133]; Abbildungen 1C-3C,10-25 * * Absätze [0135] - [0139], [0159] - Absatz [0175] * ----- | 1-17 | |
| A | US 2023/377295 A1 (ANGEVINE GREGORY SCOTT [CA] ET AL) 23. November 2023 (2023-11-23) * Absätze [0005] - [0049], [0088] - Absätze [0100], [0102] - [0117] * * Absätze [0134] - [0141], [0159] - Absätze [0177], [0181] - [0203] * * Appendix; Absatz [0229] - Absatz [0236] * ----- | 1-17 | **RECHERCHIERTE SACHGEBIETE (IPC)** |
| A | Khairy Sayed ET AL: "Building Energy Management Systems (BEMS)" In: "Energy Conservation in Residential, Commercial, and Industrial Facilities", 31. Juli 2017 (2017-07-31), John Wiley & Sons, Inc., Hoboken, NJ, USA, XP055607522, ISBN: 978-1-119-42206-8 Seiten 15-81, DOI: 10.1002/9781119422099.ch2, * Seite 15 - Seite 61 * ----- | 1-17 | |

Der vorliegende Recherchenbericht wurde für alle Patentansprüche erstellt

| Recherchenort | Abschlußdatum der Recherche | Prüfer |
|---|---|---|
| München | 29. November 2024 | Krafft, Gerald |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 8029

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2024

| Im Recherchenbericht angeführtes Patentdokument | Datum der Veröffentlichung | Mitglied(er) der Patentfamilie | | Datum der Veröffentlichung |
|---|---|---|---|---|
| US 2017076304 A1 | 16-03-2017 | US | 2017076304 A1 | 16-03-2017 |
| | | WO | 2017044737 A1 | 16-03-2017 |
| US 2014025343 A1 | 23-01-2014 | KEINE | | |
| US 2018089763 A1 | 29-03-2018 | JP | 6773899 B2 | 21-10-2020 |
| | | JP | 7198248 B2 | 28-12-2022 |
| | | JP | 7535563 B2 | 16-08-2024 |
| | | JP | 2019537770 A | 26-12-2019 |
| | | JP | 2021012712 A | 04-02-2021 |
| | | JP | 2023051971 A | 11-04-2023 |
| | | US | 2018089763 A1 | 29-03-2018 |
| | | WO | 2018058044 A1 | 29-03-2018 |
| US 2016048934 A1 | 18-02-2016 | KEINE | | |
| US 2024212341 A1 | 27-06-2024 | US | 2020082168 A1 | 12-03-2020 |
| | | US | 2024212341 A1 | 27-06-2024 |
| | | WO | 2020056041 A1 | 19-03-2020 |
| US 2014200861 A1 | 17-07-2014 | GB | 2525120 A | 14-10-2015 |
| | | US | 2014200861 A1 | 17-07-2014 |
| | | WO | 2014110288 A1 | 17-07-2014 |
| US 2023377295 A1 | 23-11-2023 | AU | 2021414225 A1 | 15-02-2024 |
| | | CA | 3203691 A1 | 07-07-2022 |
| | | CN | 117015771 A | 07-11-2023 |
| | | JP | 2024505370 A | 06-02-2024 |
| | | US | 2022207846 A1 | 30-06-2022 |
| | | US | 2023377295 A1 | 23-11-2023 |
| | | WO | 2022147202 A1 | 07-07-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4345676 A1

- EP 4345675 A1